# EUROPEAN PATENT APPLICATION

(11) **EP 4 297 456 A1**
(43) Date of publication of application: **27.12.2023**
(21) Application number: 23180143.2
(22) Date of filing: 19.06.2023
(51) Int. Cl.: H04W 12/08, H04W 12/041

(54) **NETWORK CONFIGURATION METHOD FOR WIRELESS COMMUNICATION DEVICE**

(30) Priority: 24.06.2022 TW 111123727
(71) Applicant: Unabitz Co., Ltd., Taipei City (TW)
(72) Inventor: Chiu, Philippe, Taipei City (TW); Kao, Valentin Michael, Taipei City (TW); Pigeard, Guillaume, Taipei City (TW); Chien, Chia-Wei, Taipei City (TW); Colindres Fontecha, Yadia Yvette, Taipei City (TW)
(74) Representative: dompatent von Kreisler Selting Werner - Partnerschaft von Patent- und Rechtsanwälten mbB

(57) **Abstract**

A network allocation method for wireless communication device (21, 31) includes following steps: obtaining a key of a wireless network group (23) from a key list by a wireless communication device (21, 31), wherein the key list is stored in the wireless communication device (21, 31), the wireless network group (23) includes a wireless network access point (231, 431, 432, 441), and the wireless network access point (231, 431, 432, 441) has a service name; calculating a service password by the wireless communication device (21, 31) according to the service name of the wireless network access point (231, 431, 432, 441) and the key of the wireless network group (23); and connecting to the wireless network access point (231, 431, 432, 441) by the wireless communication device (21, 31) according to the service password.

## Description

### BACKGROUND

### 1. Technical Field

The present invention relates to wireless networks, particularly a network configuration method for wireless communication devices.

### 2. Related Art

The Internet of Things (IoT) refers to the connection of objects and internet, collecting and utilizing data from these objects. It facilitates the exchange of information across different devices and domains, thereby enhancing workflow automation and more efficiently allocating resources and costs.

In order to obtain more valuable information, there is a growing number of IoT devices being deployed, making network configuration management increasingly important. For example, after the initial configuration of IoT devices for connectivity, situations may arise where network signals are weak or adjustments to the network configuration are required. In such cases, adding wireless network devices to the environment and reconfiguring a large number of IoT objects may consume significant time and manpower.

### SUMMARY

In view of the above, the present disclosure proposes a network configuration method for wireless communication devices, making the network configuration of wireless communication devices more flexible.

According to an embodiment of the present disclosure, a network configuration method for wireless communication device includes: obtaining a key of a wireless network group from a key list by a wireless communication device, wherein the key list is stored in the wireless communication device, the wireless network group is configured with a wireless network access point, and the wireless network access point has a service name; calculating a service password according to the service name of the wireless network access point and the key of the wireless network group by the wireless communication device; and establishing a connection to the wireless network access point according to the service password by the wireless communication device.

According to an embodiment of the present disclosure, a network configuration method for wireless communication device includes: obtaining a service name of a wireless network access point by a wireless communication device; obtaining a key from a key list by the wireless communication device, wherein the key list is stored in the wireless communication device; calculating a service password according to the service name of the wireless network access point and the key by the wireless communication device; and establishing a connection to the wireless network access point according to the calculated service password by the wireless communication device.

In view of the above, the network configuration method for wireless communication devices proposed in the present disclosure allows the wireless communication device to calculate the connection password of a wireless network access point according to the name of the wireless network access point and establish a connection. When users add a new wireless network access point and configure it into the wireless network group, the wireless communication device may communicate with the new access point while maintaining the existing key configuration.

### BRIEF DESCRIPTION OF THE DRAWINGS

The present disclosure will become more fully understood from the detailed description given hereinbelow and the accompanying drawings which are given by way of illustration only and thus are not limitative of the present disclosure and wherein:
FIG. 1 is a flowchart of a network configuration method for wireless communication device according to an embodiment of the present disclosure;
FIG. 2 is a schematic diagram of a relationship between a wireless network group, a wireless network access point, and a wireless communication device according to an embodiment of the present disclosure;
FIG. 3 is a block diagram of a wireless communication device according to an embodiment of the present disclosure;
FIG. 4 is a schematic diagram of a relationship between wireless network groups, wireless network access points, and wireless communication devices according to another embodiment of the present disclosure; and
FIG. 5 is a flowchart of a network configuration method for wireless communication device according to another embodiment of the present disclosure.

### DETAILED DESCRIPTION

In the following detailed description, for purposes of explanation, numerous specific details are set forth in order to provide a thorough understanding of the disclosed embodiments. According to the description, claims and the drawings disclosed in the specification, one skilled in the art may easily understand the concepts and features of the present invention. The following embodiments further illustrate various aspects of the present invention, but are not meant to limit the scope of the present invention.

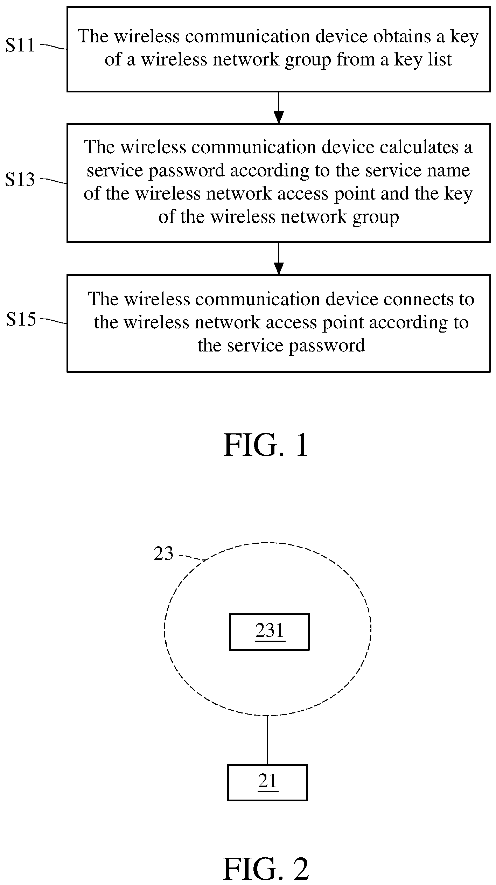

Please refer to FIG. 1 and FIG. 2. FIG. 1 is a flowchart of a network configuration method for wireless communication device according to an embodiment of the present disclosure. FIG. 2 is a schematic diagram of a relationship between a wireless network group, a wireless network access point, and a wireless communication device according to an embodiment of the present disclosure. As shown in FIG. 1 and FIG. 2, in step S11, the wireless communication device 21 obtains a key of a wireless network group 23 from a key list. The key list is stored in the wireless communication device 21. The wireless network group 23 is configured with a wireless network access point 231, and the wireless network access point 231 has a service name.

For example, the key list in the wireless communication device 21 includes slots that store the keys of the wireless network group 23. The wireless communication device 21 obtains the key of the wireless network group 23 from the designated slot according to instructions from an external device, such as another wireless communication device, a smartphone, a server, or other suitable devices or systems. The instructions may also be generated internally within the wireless communication device 21 and issued through buttons, knobs, or other control mechanisms of the wireless communication device 21 itself. In another embodiment, the wireless communication device 21 obtains the keys in sequence from the slots and verifies that the obtained key matches the key of the wireless network group 23. The verification method will be described in detail later. In addition to obtaining keys in sequence, the wireless communication device 21 may also randomly obtain a key from the slots for verification.

In step S13, the wireless communication device 21 calculates a service password of the wireless network access point 231 according to the service name of the wireless network access point 231 and the key of the wireless network group 23. In an embodiment, the wireless communication device 21 scans the wireless network signals in the environment and verifies the service name in the signals to obtain the service name of the wireless network access point 231. For example, according to specific strings in the service name, the wireless communication device 21 determines that the service name belongs to the wireless network access point 231 and performs logical operations according to another specific string in the service name and the key of the wireless network group 23 to obtain the service password of the wireless network access point 231.

In step S15, the wireless communication device 21 connects to the wireless network access point 231 according to the service password. For example, the wireless communication device 21 sends a connection request with the service name of the wireless network access point 231 as the data content. After receiving a response from the wireless network access point 231, the wireless communication device 21 sends the service password obtained from step S13. Once the service password is authenticated by the wireless network access point 231, the wireless communication device 21 establishes a communication with the wireless network access point 231. Furthermore, when the Dynamic Host Configuration Protocol (DHCP) is set up on the wireless network access point 231, the wireless communication device 21 obtains an IP address from the wireless network access point 231, allowing the wireless communication device 21 to communicate with the internet. It should be noted that those skilled in the art may connect the wireless communication device 21 to the wireless network access point 231 according to the communication protocols specified by wireless network communication technology, without being limited to the implementation described in this step.

In another example, the service name of the wireless network access point 231 includes a first string, a second string, and a third string. The wireless communication device 21 determines if the first string contains a specified keyword. Next, the wireless communication device 21 calculates a checksum by operating on the second string. When the first string contains the specified keyword and the checksum equals the third string, the wireless communication device 21 determines that the service name belongs to the wireless network access point 231, and then calculates the service password of the wireless network access point 231 according to the service name of the wireless network access point 231 and the key of the wireless network group 23. The service password may be calculated according to partial or complete service name of the wireless network access point 231, and this embodiment does not limit thereto. Furthermore, the information used for calculating the service password is not limited to the service name and the key of the wireless network group 23. The person skilled in the art may include additional information for calculating the service password according to their common knowledge in the relevant technical field. The term "calculate" in this embodiment includes, but is not limited to, one or more operations such as data retrieval, data writing, decoding, executing program instructions, logical operations, algorithms, or other computational methods executable by computer processors or microprocessors.

In a practical example, when the wireless communication device 21 needs to connect to a wireless network access point, the wireless communication device 21 scans the wireless network signals in the environment to obtain the service names of wireless network access points in the environment. The wireless communication device 21 selects a wireless network access point to establish a connection. The wireless communication device 21 obtains a key from the key list stored in the wireless communication device 21 and performs a calculation according to the key and the service name of the wireless network access point to generate a service password. Then, the wireless communication device 21 sends a connection request according to the service password. Once the service password is validated by the wireless network access point, and the network address is received by the wireless communication device 21, the wireless communication device 21 verifies that the key belongs to the wireless network group associated with the wireless network access point.

In the aforementioned example, when selecting a wireless network access point to connect to in the environment, the service name of the access point may be verified to determine if this wireless network access point is connectable. It should be noted that those skilled in the art may choose whether to verify the connectability of the wireless network access point in advance, and this is not limited in this embodiment.

In the aforementioned embodiment, the wireless communication device 21 may be an item with built-in wireless network communication capabilities or a device that can be attached to the item to be tracked. The wireless network access point may be a network connectivity device that provides Wi-Fi, Li-Fi (Light Fidelity), or other suitable wireless local area network technologies. In the case of Wi-Fi, for example, the service name is referred to as the service set identifier (SSID), and the service password is the authentication method used by the Wi-Fi wireless network access point to accept communication requests.

In other words, by grouping wireless network access points and calculating the service password according to the key of the wireless network group, the wireless communication device 21 does not need to remember the service names and passwords of each individual wireless network access point, but still can establish connections with different wireless network access points located in various areas according to practical needs. Configuring different service names and passwords for the wireless network access points in the environment also contributes to the data security of the wireless local area network.

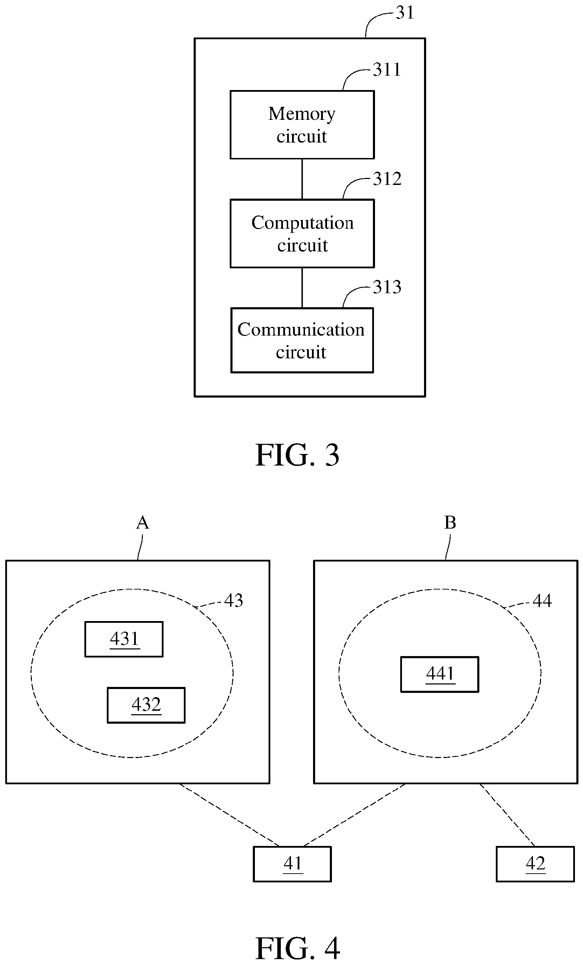

Please refer to FIG. 3. FIG. 3 is a block diagram of a wireless communication device according to an embodiment of the present disclosure. As shown in FIG. 3, in an embodiment, the wireless communication device 31 includes a memory circuit 311, a computation circuit 312, and a communication circuit 313. The computation circuit 312 is electrically connected to the memory circuit 311 and the communication circuit 313.

The memory circuit 311 is configured to store a key list. The memory circuit 311 can be one or more of the following examples: read-only memory (ROM), programmable ROM (PROM), electrically programmable ROM (EPROM), electrically erasable and programmable ROM (EEPROM), flash memory, phase-change random access memory (PRAM), magnetic RAM (MRAM), resistive RAM (RRAM), and/or ferroelectric RAM (FRAM).

As described above, the present disclosure groups wireless network access points, namely configuring the wireless network access point into a wireless network group. When a user adds a new wireless network access point to the wireless network group, the wireless communication device can calculate the service password according to the stored wireless network group key and the service name of the new wireless network access point. This allows the wireless communication device 21 to maintain communication with the new wireless network access point according to the existing configuration key.

The communication circuit 313 may be, for example, Near Field Communication (NFC), Low-Power Wide-Area Network (LPWAN) technologies, Long Term Evolution (LTE), wireless local area network technologies, or a combination of one or more suitable communication technologies. For example, the wireless communication device 31 may receive keys from external devices through communication technology modules such as NFC, LPWAN, LTE, store them in the key list, and may communicate and establish connections with wireless network access points through Wi-Fi communication technology modules.

The computation circuit 312 may be implemented with one or more of the following examples: microprocessors such as central processing unit (CPU), graphic processing unit (GPU), and/or application processors (AP); logic chips such as field programmable gate arrays (FPGA) and application-specific integrated circuits (ASIC).

The block diagram of the wireless communication device shown in FIG. 3 is provided for illustrative purposes only. Those skilled in the art can configure the hardware structure of the wireless communication device according to actual needs.

Please refer to FIG. 4. FIG. 4 is a schematic diagram of a relationship between wireless network groups, wireless network access points, and wireless communication devices according to another embodiment of the present disclosure. As shown in FIG. 4, this embodiment includes a first wireless communication device 41, a second wireless communication device 42, a first wireless network group 43, and a second wireless network group 44. For example, when the user configures the wireless network group to which a wireless network access point belongs, the user may set the wireless network access point located in Warehouse A as the first wireless network group 43, and the wireless network access point located in Warehouse B as the second wireless network group 44.

At this time, because the intended route that the first wireless communication device 41 is expected to pass and stay includes Warehouse A and Warehouse B, the first key list of the first wireless communication device 41 stores the keys for the first wireless network group 43 and the second wireless network group 44. The intended route that the second wireless communication device 42 is expected to pass and stay is Warehouse A, so the second key list of the second wireless communication device 42 stores the key for the first wireless network group 43.

In an embodiment, Warehouse A originally has a wireless network access point 431 and wants to add a wireless network access point 432 later. After configuring the wireless network access point 432 in Warehouse A, and after the first wireless communication device 41 and the second wireless communication device 42 scan the service name of the wireless network access point 432, they can calculate the service password of the wireless network access point 432 and communicate thereof according to the existing key of the first wireless network group 43.

In an embodiment, the wireless communication device communicates with only one wireless network access point at a time. For example, the wireless communication device may choose to connect with the wireless network access point that offers better communication quality. When the wireless communication device scans and detects a wireless network access point with even better communication quality, it can switch from the current connected wireless network access point to the new one. Alternatively, according to user's configuration, the wireless communication device can switch and connect to a specified wireless network access point.

In an embodiment, in addition to the service name of a wireless network access point and the key of a wireless network group, the wireless communication device further calculates the service password of the wireless network access point according to its own hardware identifier. In other words, the hardware identifier of the wireless communication device is the decryption key for the wireless network group key. After receiving the key from an external server, the wireless communication device decrypts the key according to its hardware identifier, and then uses the decrypted key along with the service name to calculate the service password. Those skilled in the art in the relevant technical field may choose whether the key list should store decrypted keys according to the hardware identifier or store undecrypted keys and decrypt them according to the hardware identifier code in subsequent steps. This embodiment does not limit thereto.

From another perspective, when the external server pushes the key of the same wireless network group to the first wireless communication device 41 and the second wireless communication device 42, the external server encrypts the keys separately according to the hardware identifier of the first wireless communication device 41 and the hardware identifier of the second wireless communication device 42. However, the key decoded by the first wireless communication device 41 is different from the key decoded by the second wireless communication device 42, which means that the key for the wireless network group 43 stored in the first wireless communication device 41 is different from the key for the wireless network group 43 stored in the second wireless communication device 42. Although different wireless communication devices store different keys for the same wireless network group, the service passwords obtained according to the same wireless network access point and calculated by both wireless communication devices will be the same.

In practice, when the first wireless communication device 41 is transferred from Warehouse A to Warehouse B, the first wireless communication device 41 scans the service name of the wireless network access point 441 in Warehouse B and obtains the key of the second wireless network group 44 from the first key list. The first wireless communication device 41 calculates the service password of the wireless network access point 441 according to the service name of the wireless network access point 441 and the key of the second wireless network group 44, and uses the service password to establish a communication connection with the wireless network access point 441.

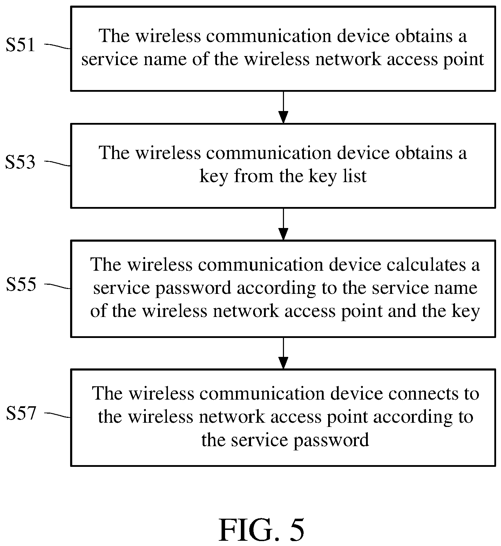

Please refer to FIG. 5. FIG. 5 is a flowchart of a network configuration method for wireless communication device according to another embodiment of the present disclosure. In this embodiment, the technical method for implementing grouped wireless network access points is performed by a computer system outside of the wireless communication device, such as a management platform hosted on a server, but not limited to that. The management platform groups the wireless network access points and sets the service name and service password of the wireless network access point in the wireless network group according to the key of the wireless network group. Therefore, in this embodiment, the wireless communication device stores the key of the wireless network group without memorizing the wireless network group to which each wireless network access point belongs.

As shown in the FIG. 5, in step S51, the wireless communication device obtains the service name of the wireless network access point. For example, the wireless communication device scans the wireless network signals in the environment to obtain the service name of the wireless network access points in the environment. In step S53, the wireless communication device obtains a key from the key list. In other words, after selecting the wireless network access point for performing communication, the wireless communication device obtains a key from the key list. The method of obtaining the key can refer to various methods described in the aforementioned embodiments, and this embodiment does not describe again

In step S55, the wireless communication device calculates the service password according to the service name of the wireless network access point and the key. In other words, the wireless communication device calculates a set of service passwords according to the key and service name obtained in steps S51 and S53. The wireless communication device establishes a network connection with the wireless network access point according to the service password. When the wireless communication device receives the access permission response from the wireless network access point, the wireless communication device connects to the wireless network access point, which is step S57. The wireless communication device connects to the wireless network access point according to the service password.

In an embodiment, when the wireless communication device does not receive the access permission response from the wireless network access point, indicating that the connection is not allowed, the wireless communication device obtains another key and repeats step S55 until it receives the access permission response from the wireless network access point or until all the stored keys in the wireless communication device have been tried.

In an embodiment, in step S51, when the wireless communication device obtains service names of all wireless network access points in the environment, the wireless communication device can further verify whether the wireless network access point can be connected according to the service name. For example, according to specific strings in the service name, it can be determined that the wireless network access point is under the jurisdiction of a management platform. Those skilled in the art can also complete this step with other verification methods according to practical needs, and this embodiment does not limit thereof.

In an embodiment, the key stored in the wireless communication device is provided by a management platform. When the management platform provides the key, the management platform may encrypt the key according to the hardware identifier of the wireless communication device. Therefore, in step S53, the wireless communication device decodes the obtained key according to the hardware identifier before calculating the service password. In other embodiments, the wireless communication device may decrypt the key according to the hardware identifier upon receiving the key provided by the management platform and store the decrypted key in the key list, and this embodiment does not limit thereof.

In view of the above, by configuring the wireless network access points into the wireless network group, the present disclosure groups the wireless network access points into a wireless network group, allows the wireless communication device to communicate with a wireless network access point according to the key of the wireless network group, and calculate the wireless network access point. When a new wireless network access point is added to the wireless network group, the wireless communication device uses the stored wireless network group key to calculate the service password for the new wireless network access point. The wireless communication device can maintain communication with the new wireless network access point while maintaining the original key configuration.

The network configuration method for wireless communication device proposed in the present disclosure enables the wireless communication device to automatically calculate the connection password of the wireless network access point according to the name of the wireless network access point and establish a connection. Additionally, through the design of the wireless network groups proposed in the present disclosure, the wireless communication device with limited storage space can automatically calculate a large number of different passwords, enabling connections to multiple wireless network access points.

Although embodiments of the present application are disclosed as described above, they are not intended to limit the present application, and a person having ordinary skill in the art, without departing from the spirit and scope of the present application, can make some changes in the shape, structure, feature and spirit described in the scope of the present application. Therefore, the scope of the present application shall be determined by the scope of the claims.

## Claims

1. A network configuration method for wireless communication device comprising:
obtaining a key of a wireless network group (23) from a key list by a wireless communication device (21, 31), wherein the key list is stored in the wireless communication device (21, 31), the wireless network group (23) is configured with a wireless network access point (231, 431, 432, 441), and the wireless network access point (231, 431, 432, 441) has a service name;
calculating a service password according to the service name of the wireless network access point (231, 431, 432, 441) and the key of the wireless network group (23) by the wireless communication device (21, 31); and
establishing a connection to the wireless network access point (231, 431, 432, 441) according to the service password by the wireless communication device (21, 31).

2. The network configuration method for wireless communication device of claim 1, wherein in a step of calculating the service password according to the service name of the wireless network access point (231, 431, 432, 441) and the key of the wireless network group (23) by the wireless communication device (21, 31), the wireless communication device (21, 31) further decodes the key of the wireless network group (23) according to a hardware identifier.

3. The network configuration method for wireless communication device of claim 1, wherein when the wireless network group (23) is configured with a plurality of wireless network access points (231, 431, 432, 441), each of the plurality of wireless network access points (231, 431, 432, 441) has a different service name.

4. The network configuration method for wireless communication device of claim 1, wherein the key list is a first key list, the key listed in the first key list is a first key, the wireless communication device (21, 31) is a first wireless communication device (41), and the network configuration method for wireless communication device (21, 31) further comprises:
obtaining a second key corresponding to the wireless network group (23) from a second key list by a second wireless communication device (42), wherein the second key list is stored in the second wireless communication device (42);
calculating the service password according to the service name of the wireless network access point (231, 431, 432, 441) and the second key of the wireless network group (23) by the second wireless communication device (42); and
connecting to the wireless network access point (231, 431, 432, 441) according to the service password by the second wireless communication device (42).

5. The network configuration method for wireless communication device of claim 1, wherein the wireless network group (23) is a first wireless network group (43), the wireless network access point (231, 431, 432, 441) is a first wireless network access point (231, 431, 432, 441), the service name is a first service name, the service password is a first service password, and the network configuration method for wireless communication device further comprises:
obtaining a key of a second wireless network group (44) from the key list by the wireless communication device (21, 31), wherein the second wireless network group (44) is configured with a second wireless network access point (231, 431, 432, 441), and the second wireless network access point (231, 431, 432, 441) has a second service name;
calculating a second service password of the second wireless network access point (231, 431, 432, 441) according to the second service name and the key of the second wireless network group (44) by the wireless communication device (21, 31); and
switching a connection to the second wireless network access point (231, 431, 432, 441) according to the second service password by the wireless communication device (21, 31).

6. The network configuration method for wireless communication device of claim 1,
wherein the wireless network access point (231, 431, 432, 441) is a first wireless network access point, the network configuration method for wireless communication device further comprises:
scanning a second wireless network access point of the wireless network group (23) by the wireless communication device (21, 31);
calculating a service password of the second wireless network access point according to the service name of the second wireless network access point and the key of the wireless network group (23); and
switching a connection to the second wireless network access point according to the service password of the second wireless network access point by the wireless communication device (21, 31).

7. A network configuration method for wireless communication device comprising:
obtaining a service name of a wireless network access point (231, 431, 432, 441) by a wireless communication device (21, 31);
obtaining a key from a key list by the wireless communication device (21, 31), wherein the key list is stored in the wireless communication device (21, 31);
calculating a service password according to the service name of the wireless network access point (231, 431, 432, 441) and the key by the wireless communication device (21, 31); and
establishing a connection to the wireless network access point (231, 431, 432, 441) according to the service password by the wireless communication device (21, 31).

8. The network configuration method for wireless communication device of claim 7, wherein in a step of calculating the service password according to the service name of the wireless network access point (231, 431, 432, 441) and the key by the wireless communication device (21, 31), the wireless communication device (21, 31) further calculates the service password according to a hardware identifier.

9. The network configuration method for wireless communication device of claim 7, further comprising: decoding the key according to a hardware identifier by the wireless communication device (21, 31), wherein the hardware identifier is stored in the wireless communication device (21, 31).

10. The network configuration method for wireless communication device of claim 7, wherein in a step of obtaining the service name of the wireless network access point (231, 431, 432, 441) by the wireless communication device (21, 31), the method further comprises:
scanning the service name of the wireless network access point (231, 431, 432, 441) by the wireless communication device (21, 31); and
verifying whether the wireless network access point (231, 431, 432, 441) is connectable according to the service name by the wireless communication device (21, 31).

11. The network configuration method for wireless communication device of claim 7, further comprising:
verifying the key according to whether the wireless network access point (231, 431, 432, 441) is connectable by the wireless communication device (21, 31);
wherein when the wireless network access point (231, 431, 432, 441) is not connectable, the wireless communication device (21, 31) obtains another key from the key list.
